# EUROPÄISCHE PATENTSCHRIFT

(11) **EP 1 895 216 B1**
(45) Veröffentlichungstag und Bekanntmachung des Hinweises auf die Patenterteilung: **19.10.2011**
(21) Anmeldenummer: 07109599.6
(22) Anmeldetag: 05.06.2007
(51) Int. Cl.: F16K 27/04

(54) **Schraubenlose Verbindung für das Ober- und Unterteil einer Absperrarmatur**
Screwless connection for the upper and lower part of a shut-off valve
Connexion sans vis pour les parties supérieure et inférieure d'une armature de verrouillage

(30) Priorität: 04.09.2006 DE 202006013531 U
(43) Veröffentlichungstag der Anmeldung: 05.03.2008
(73) Patentinhaber: Hawle Armaturen GmbH, 83395 Freilassing (DE)
(72) Erfinder: Käfer, Manuela, 5310 Mondsee (AT); Ehrenlechner, Gregor, 83317 Teisendorf (DE); Frey, Alexander, 83404 Feldkirchen (DE)
(74) Vertreter: Schwabe - Sandmair - Marx

(56) Entgegenhaltungen:
- DE-U1- 20 308 121
- DE-U1-202006 015 675
- GB-A- 2 271 165
- US-A- 4 714 236

## Beschreibung

Die Erfindung betrifft eine Absperrarmatur für Fluidleitungen, insbesondere Gas- und/oder Flüssigkeits-Leitungen. Solche Absperrarmaturen werden in Versorgungs- oder Entsorgungsrohre eingesetzt, um diese bei Bedarf absperren zu können, und haben als generellen Aufbau ein Oberteil, das im wesentlichen eine Betätigung für ein Absperrelement aufweist, und ein Unterteil, das im wesentlichen den absperrbaren Durchleitungsabschnitt der Armatur umfasst. Beispiele für solche Absperrarmaturen (auch Absperrschieber genannt) finden sich in der DE 10 050 240 B4 sowie in der US 2,606,740.

Bei den Absperrarmaturen gemäß dem Stand der Technik werden Oberteil und Unterteil durch Schraubenverbindungen zusammengehalten, meist durch Schraubflansche.

Solche Absperrarmaturen werden meist als Gussteile hergestellt, und ein Nachteil der verwendeten Schraubenverbindungen liegt darin, dass die Gussteile an der Verbindungsstelle bearbeitet werden müssen. Hieraus folgt wiederum, dass sie an diesen bearbeiteten Stellen korrosionsanfällig sind.

Ein Absperrschieber mit einer schraubenlosen Haube ist aus der DE 85 11 025 U1 bekannt. Das Oberteil dieses Absperrschiebers wird über das Unterteil gestülpt und von unten her mit segmentartigen Stützelementen gesichert, die nicht weiter befestigt werden.

Aus der DE 203 08 121 U1 ist eine Haubenbefestigung für Armaturen bekannt, wobei Verriegelungsstifte über Ausnehmungen eingefädelt werden und so eine Haube am Armaturengehäuse halten.

Aus der DE 202 006 015 575 U1. der US-A 4,714,236 und der GB-A-22 71 165 sind ebenfalls Absperrarmaturen mit einem an einem Unterteil befestigten Oberteil bekannt.

Es ist eine Aufgabe der vorliegenden Erfindung, eine Absperrarmatur bereitzustellen, die eine Oberteil-Unterteil-Verbindung aufweist, welche die oben aufgezeigten Nachteile des Standes der Technik überwindet bzw. einen zuverlässigen Halt zwischen Oberteil und Unterteil garantiert. Insbesondere soll auch ein konstruktiver Korrosionsschutz ermöglicht werden.

Diese Aufgabe wird erfindungsgemäß durch eine Absperrarmatur gemäß dem Anspruch 1 gelöst. Die Unteransprüche definieren bevorzugte Ausführungsformen der Erfindung.

Bei der erfindungsgemäßen Absperrarmatur sind das Oberteil und das Unterteil schraubenlos über mindestens ein separates Einsetzelement miteinander verbunden, wobei das Unterteil eine obere Aufnahme für das Einsetzelement bzw. die Einsetzelemente aufweist und das Einsetzelement bzw. die Einsetzelemente mittels eines separaten Deckelteils gesichert bzw. verklemmt wird bzw. werden.

Mit anderen Worten stellt die vorliegende Erfindung nicht nur eine Verklemmung zwischen Oberteil und Unterteil bereit, sondern sorgt auch noch dafür, dass die Verklemmung sich nicht ohne weiteres lösen kann. Das dafür vorgesehene Deckelteil hält - über den Umweg der Halterung der Einsatzelemente (Klemmelemente) - in dieser Weise das Oberteil auf dem Unterteil und sichert die schraubenlose Verbindung zusätzlich, so dass ein ungewolltes Lösen des Oberteils vom Unterteil nicht mehr befürchtet werden muss. Das Deckelteil kann ferner einen geeigneten oberen Abschluss für die Verbindungsstelle zwischen Oberteil und Unterteil bilden, vor allem bei Ausführungsformen, bei denen das Oberteil von oben in das Unterteil eingesetzt wird und der Raum über der Aufnahme des Unterteils nach oben abgeschlossen werden muss.

Es besteht die Möglichkeit, dass Oberteil und das Unterteil an unbearbeiteten Gussteil-Verbindungsstellen miteinander zu verbinden, wenn die erfindungsgemäße Ausgestaltung gewählt wird. Dabei werden blanke Stellen, wie sie durch Schraubenlöcher, Gewinde und Flanschoberflächen entstehen können, vermieden, und schon dadurch wird ein konstruktiver Korrosionsschutz bereitgestellt. Es eröffnen sich durch die vorliegende Erfindung für einen Konstrukteur eine Vielzahl von Verbindungsmöglichkeiten, die weniger Angriffstellen für Korrosion bieten und außerdem mit einem geringeren Bearbeitungsaufwand für die Armaturenteile verbunden sind. Die Verbindung zwischen Ober- und Unterteil kann im Rahmen der Erfindung form- und/oder reibschlüssig und insbesondere eine Klemm- und/oder Rastverbindung sein. Die Einsetzelemente stellen beim Zusammenfügen der Verbindung einen Halt zwischen Oberteil und Unterteil her.

Bei einer Ausgestaltung der erfindungsgemäßen Armatur weist das Deckelteil einen nach unten abstehenden, speziell inneren Fortsatz auf, der auf das Einsetzelement bzw. die Einsetzelemente wirkt bzw. drückt. Durch diese Wirkung bzw. durch diesen Druck wird verhindert, dass das Einsetzelement bzw. die Einsetzelemente den Ort ihrer vorgesehenen Anordnung verlassen und so die Verbindung lösen.

Das Deckelteil kann ferner einen nach unten abstehenden, speziell äußeren Fortsatz aufweisen, der das Unterteil, insbesondere dessen obere Aufnahme, von außen umgreift. In spezieller Ausgestaltung nimmt das Deckelteil das Unterteil im zusammengebauten Zustand der Armatur klemmend oder rastend in Eingriff, insbesondere mit dem oben erwähnten äußeren Fortsatz. Diese Ausführungsformen ermöglichen einen sauberen und schmutzdichten äußeren Abschluss der gesamten Verbindung sowie eine optimierte Krafteinleitung. Die Verbindungs- bzw. Einsetzelemente können aus einem nicht metallischen Material hergestellt sein, insbesondere einem Kunststoffmaterial (Hartkunststoff); sie können aber auch aus einem metallischen Material, insbesondere aus Stahl, hergestellt sein. Was die Einsetzelemente bzw. das Einsetzelement betrifft, so wird bevorzugt eine flexible Ausgestaltung gewählt, insbesondere aus einzelnen Klemmteilen (Klemmbacken), die mit biegbaren Zwischenstücken miteinander verbunden sind.

Bei einer Ausführungsform der erfindungsgemäßen Absperrarmatur ist ein Einsetzelement vorgesehen, welches zwischen Oberteil und Unterteil verklemmt wird. Insbesondere ist es möglich, dass sich ein solches einzelnes Einsetzelement beim Zusammenfügen der Verbindung schräg stellt und durch Verklemmung das Oberteil und das Unterteil aneinander hält.

Gemäß einer anderen Ausführungsform der vorliegenden Erfindung werden für die Verbindungen mindestens zwei Einsetzelemente vorgesehen, die Schrägflächen aufweisen, die beim Zusammenfügen der Verbindung gegeneinander verklemmt werden und durch die Verklemmung das Oberteil und das Unterteil aneinander halten. Speziell umfasst die Verbindung zwischen Oberteil und Unterteil ein erstes Einsetzelement und ein zweites Einsetzelement, welche übereinander und/oder nebeneinander in der Aufnahme angeordnet sind. Diese beiden Elemente oder auch ein einzelnes Einsetzelement können immer umfänglich in der Aufnahme vorgesehen werden, so dass sie um den gesamten Rand der Verbindung einen festen Halt sichern.

Die Erfindung wird im Weiteren anhand einer Ausführungsform näher erläutert. Sie kann alle hierin beschriebenen Merkmale einzeln und in jeder sinnvollen Kombination aufweisen. In den beiliegenden Zeichnungen zeigen:
- Figur 1: einen Halbschnitt einer ersten Ausführungsform einer Absperrarmatur in perspektivischer Darstellung;
- Figur 2: einen Halbschnitt der Armatur als Stirnansicht;
- Figur 3: ein Deckelteil einer Oberteil-Unterteil-Verbindung für eine Absperrarmatur mit Einsetzelementen;
- Figur 4: eine Explosionsansicht der Komponenten aus Figur 3;
- Figur 5: eine Explosionsansicht für eine zweite Ausführungsform einer Absperrarmatur;
- Figur 6: einen Halbschnitt der Armatur aus Figur 5 in Schrägansicht;
- Figur 7: einen Halbschnitt der Armatur aus Figur 5;
- Figur 8: die Armatur aus Figur 5 im zusammengebauten Zustand mit weggeschnittenen Teilen, und
- Figuren 9 und 10: eine erfindungsgemäß ausgestaltete Absperrarmatur.

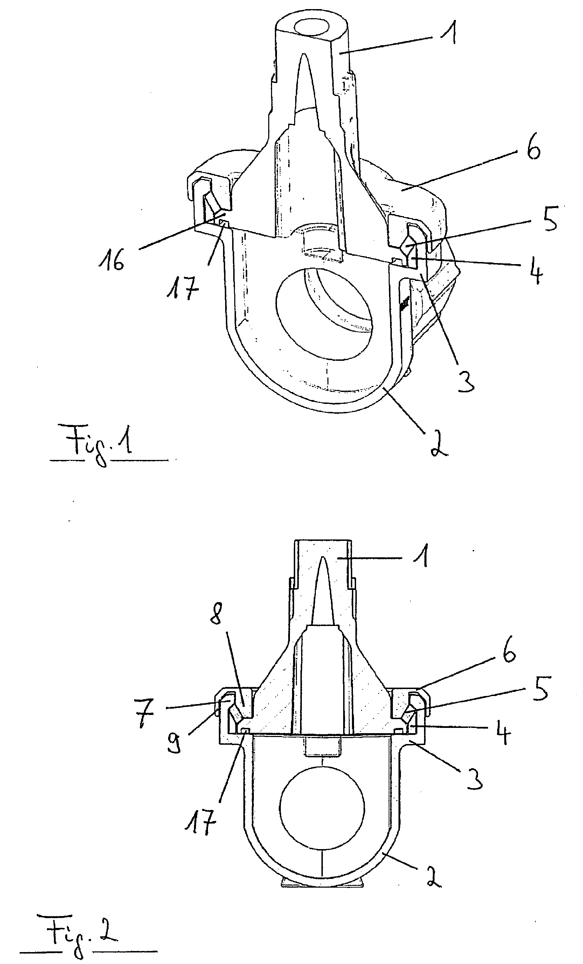

Wie aus den Figuren 1 und 2 hervorgeht, weist eine erste Ausführungsform einer offenbarten Absperrarmatur ein Oberteil 1 auf, das im Wesentlichen der Halterung einer nicht dargestellten Absperrspindel dient, sowie ein Unterteil 2, das im Wesentlichen den absperrbaren Durchleitungsabschnitt der Armatur umfasst. Oberteil 1 und Unterteil 2 der Absperrarmatur sind schraubenlos miteinander verbunden, und zwar durch eine Kombination mehrerer Elemente, nämlich durch eine Aufnahme 3 oben am Unterteil 2, durch Einsetzelemente 4 und 5 und durch ein Deckelteil 6.

Die Aufnahme 3 des Unterteils 2 weist eine Auskragung auf, sowie einen nach oben abstehenden Fortsatz, der sich an seinem Endabschnitt 7 wieder nach innen verjüngt. Dadurch entsteht eine Art konkave Aushöhlung oben am Unterteil 2, welche die vorgenannte Aufnahme 3 bildet. Die Öffnung, die durch den Endabschnitt 7 der Aufnahme 3 gebildet wird, ist noch immer so groß, dass das Oberteil einfach durch die Öffnung hindurch auf den unteren flachen Abschnitt der Aufnahme 3 aufgesetzt werden kann, so dass es mit seiner unteren Auskragung 16 auf dem Unterteil 2 zu liegen kommt. Die Bauteile können dabei unbearbeitete Gussteile sein, insbesondere im Inneren der Aufnahme 3 und am auskragenden Abschnitt 16 des Oberteil 1. In diesem Abschnitt 16 kann noch eine umlaufende Nut 17 eingebracht sein, die eine nicht dargestellte Dichtung, zum Beispiel eine O-Ring-Dichtung aufnehmen kann, um die Dichtigkeit zwischen Oberteil 1 und Unterteil 2 sicherzustellen.

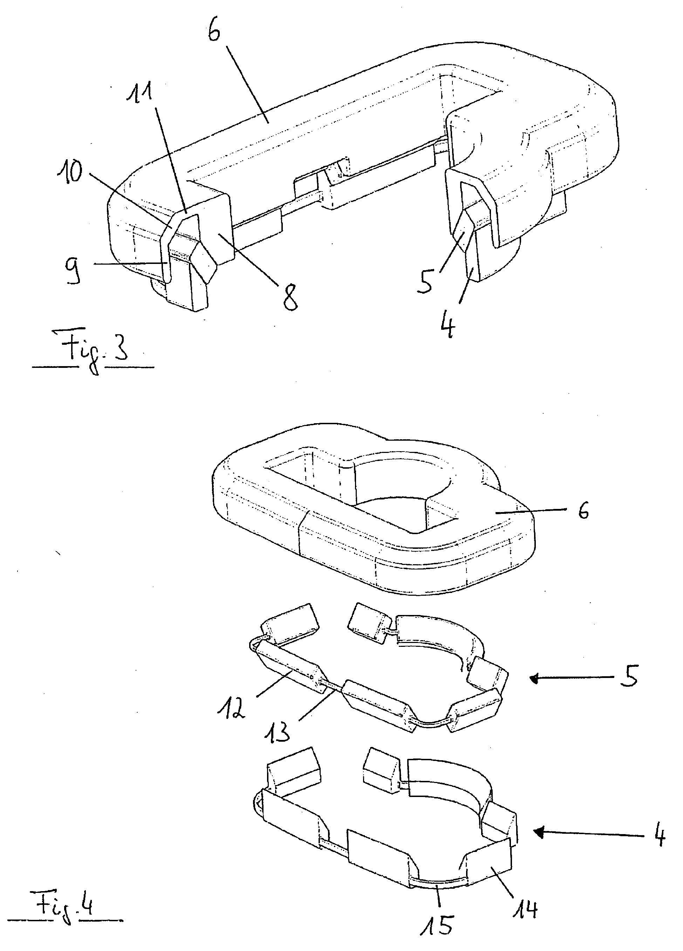

Die Herstellung der Verbindung und ihre Sicherung wird nunmehr durch ein Deckelteil 6 und Einsetzelemente 4, 5 realisiert, und diese Bauelemente sind speziell in den Figuren 3 und 4 besser und detaillierter erkennbar.

Die beiden Einsetzelemente 4 und 5 bestehen jeweils aus einzelnen Klemmteilen (Klemmbacken), die am unteren Einsetzelement das Bezugszeichen 14 und am oberen Einsetzelement das Bezugszeichen 12 tragen. Diese Klemmteile oder Klemmbacken 12, 14 sind jeweils mit biegbaren Zwischenstücken 13, 15 miteinander verbunden, so dass sich die Einsetzelemente insgesamt in einfacher Weise in die Aufnahme 3 einsetzen lassen. Die Klemmteile 14 des Einsetzelementes 4 weisen an ihren inneren Oberflächen schräg nach außen verlaufende Kanten auf, an die sich die Klemmteile 12 des Einsatzelements 5 ansetzen können.

Der Deckelteil 6 hat einen oberen horizontalen Abschnitt 11, von dem sich innen und nach unten ein innerer Fortsatz 8 erstreckt. Auf der anderen Seite fällt das Deckelteil im Abschnitt 10 schräg ab und es schließt sich der äußere, nach unten abstehende Fortsatz 9 an (siehe Figur 3).

Der Zusammenbau und die Herstellung der Verbindung geht nun wie folgt vor sich: zunächst wird das Einsetzelement 4 in die Aufnahme 3 des Unterteils 2 so eingesetzt, dass es mit seiner Außenseite an der Innenseite der Aufnahme 3 anliegt. Danach kann das Oberteil 1 so in die Aufnahme 3 eingebracht werden, dass es mit seinem unteren Fortsatz 16 außen an der Innenseite des Einsetzelements 4 bzw. der einzelnen Klemmteile 14 anliegt. Nunmehr erfolgt das Einsetzen des zweiten Einsetzelements 5, wobei dessen Klemmteile 12 einerseits an der Schrägfläche der Klemmteile 14 zu liegen kommen und andererseits zwischen dem Fortsatz 16 des Oberteils 1 und dem nach innen zurückgebogenen Endabschnitt 7 der Aufnahme 3.

Gesichert wird die Verbindung dann durch das Aufsetzen des Deckelteils 6, und zwar so, dass dessen äußerer Fortsatz 9 den Endabschnitt 7 umgreift und dessen innerer Fortsatz 8 einerseits schräg auf die Klemmteile 12 des Einsetzelementes 5 und andererseits von oben auf den Abschnitt 16 des Oberteils 1 drückt. Wegen der Schrägflächen zwischen den Einsetzelementen 4 und 5 sowie dem inneren Fortsatz 8 und dem Einsetzelement 5 entsteht eine gewünschte Klemmwirkung, die einen sicheren Halt zwischen Oberteil 1 und Unterteil 2 gewährleistet. Es ist im Rahmen der vorliegenden Erfindung auch noch denkbar, eine zusätzliche Rastverbindung mit einzuführen, beispielsweise zwischen dem Fortsatz 9 und der Außenseite der Auf nahme 3 oder zwischen dem Fortsatz 8 und der Innenseite der Aufnahme 3, insbesondere im Bereich des nach innen gebogenen Endabschnittes 7 des Unterteils 2. Zur Herstellung einer solchen Verbindung muss weder das Oberteil noch das Unterteil der Armatur bearbeitet werden, entsprechende Arbeitsvorgänge können eingespart werden (was durchaus die Bereitstellung zusätzlicher Verbindungsteile rechtfertigt), und die Korrosionsanfälligkeit wird auf ein Minimum gesenkt.

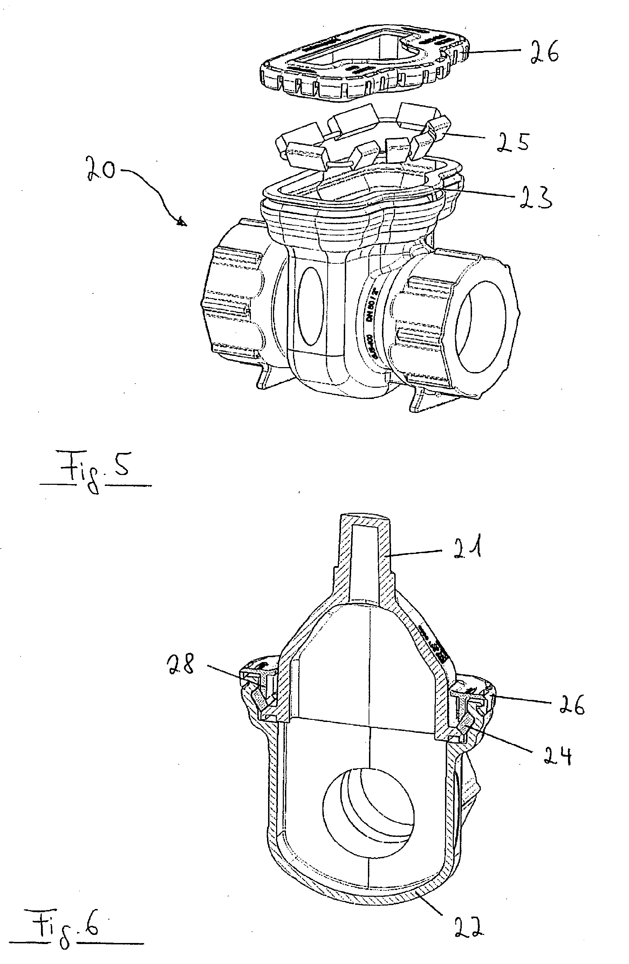

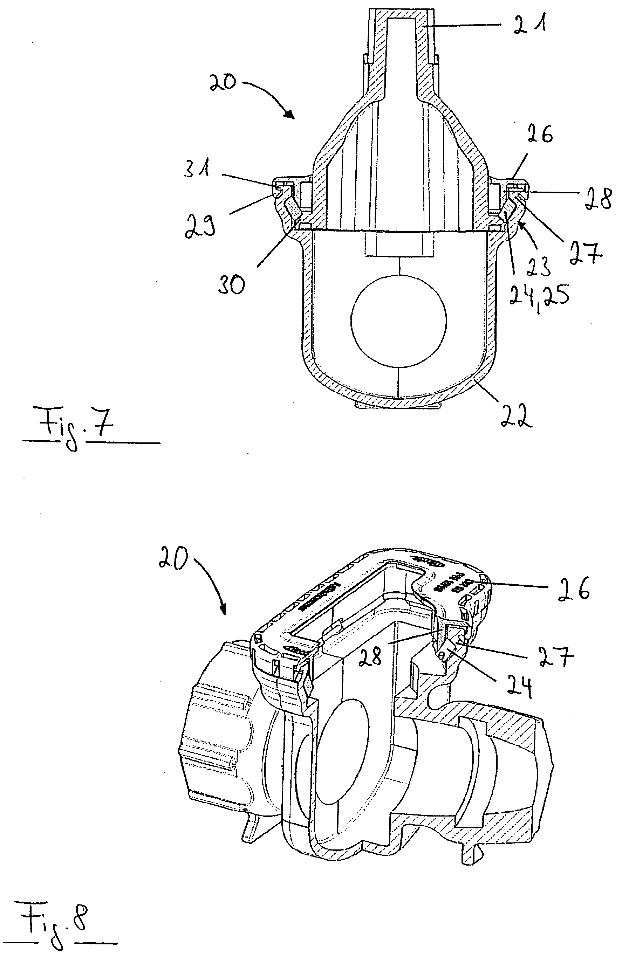

Eine zweite Ausführungsform ist in den Figuren 5 bis 8 dargestellt, wobei in den Schrägansichten der Figuren 5 und 8 nur das Unterteil der Armatur mit Deckel zu sehen ist und die Halbschnitte der Figuren 6 und 7 jeweils eine zusammengebaute Armatur mit verbundenem Oberteil und Unterteil zeigen. Die Armatur ist in ihrer zweiten Ausführungsform insgesamt mit dem Bezugszeichen 20 bezeichnet worden, mit dem Oberteil 21 und mit dem Unterteil 22. Die Verbindung zwischen Oberteil 21 und Unterteil 22 erfolgt wiederum in der oberen Aufnahme 23 des Unterteils 22, in welche das Oberteil 21 von oben eingesetzt wird.

Im Gegensatz zu der Ausführungsform in den Figuren 1 bis 4 hat die Ausführungsform der Figuren 5 bis 6 nur ein Einsetzelement 24, das sich umfänglich in die Aufnahme 23 einfügt und aus mehreren durch flexible Stege verbundenen Klemmbacken 25 besteht. Wenn das Oberteil 21 in die Aufnahme 23 eingesetzt ist, wird das Einsetzelement 24 von oben darüber gesetzt und zwischen dem auskragenden Abschnitt, d.h. die schräge Außenfläche 30 am Oberteil und dem nach innen gebogenen Endabschnitt 27 der Aufnahme 23 eingesetzt bzw. eingeklemmt. In diesem Zustand sichert das Einsetzelement 27 schon das Oberteil 21 gegen ein Herausziehen aus dem Unterteil 22. Weil das Material der Aufnahme 23 seitlich und unterhalb des Einsetzelements 24 liegt, ist auch nicht zu befürchten, dass letzteres einfach herausfallen könnte.

Um noch eine weitere Sicherheit gegen das Lösen der Verbindung bereitzustellen, wird der Deckel 26 ebenfalls von oben aufgesetzt, und er kommt mit seinem inneren Fortsatz 28, der eine untere Schrägfläche aufweist, auf dem Einsetzelement 24 zu liegen, d.h. auf den schrägen Innenseite der Klemmbacken 25. Außen am Deckel ist der äußere Fortsatz 29 hakenartig nach innen ausgebildet, und er umgreift eine Nase 31, die den oberen Abschluss des Endabschnittes 7 bildet. Der Deckel wird also auf dem Unterteil 22, d.h. auf dem Fortsatz 27 aufgeschnappt bzw. aufgerastet, und kann so gegengehalten werden, wenn er die haltende Druckkraft über den inneren Fortsatz 28 auf das Einsetzelement 24 ausübt.

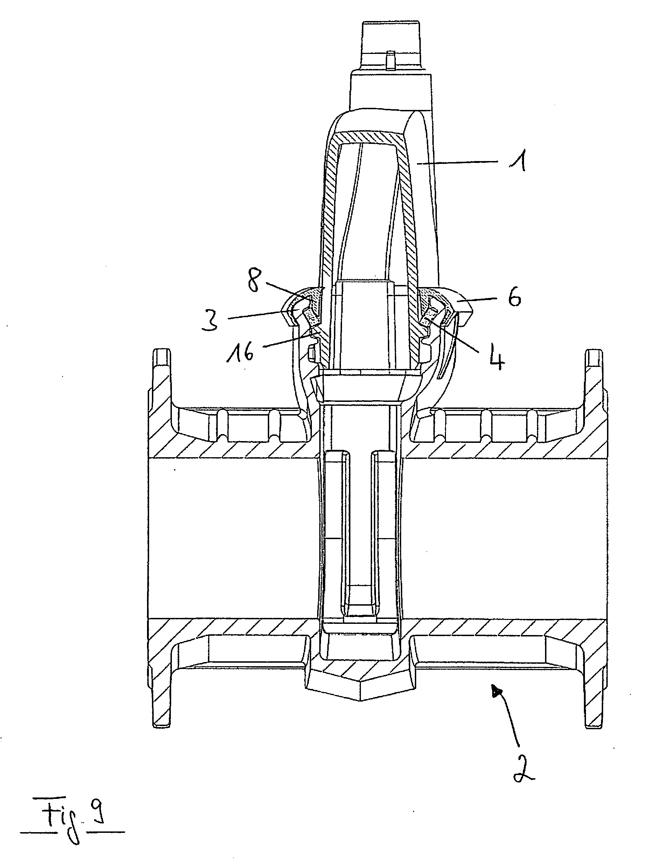

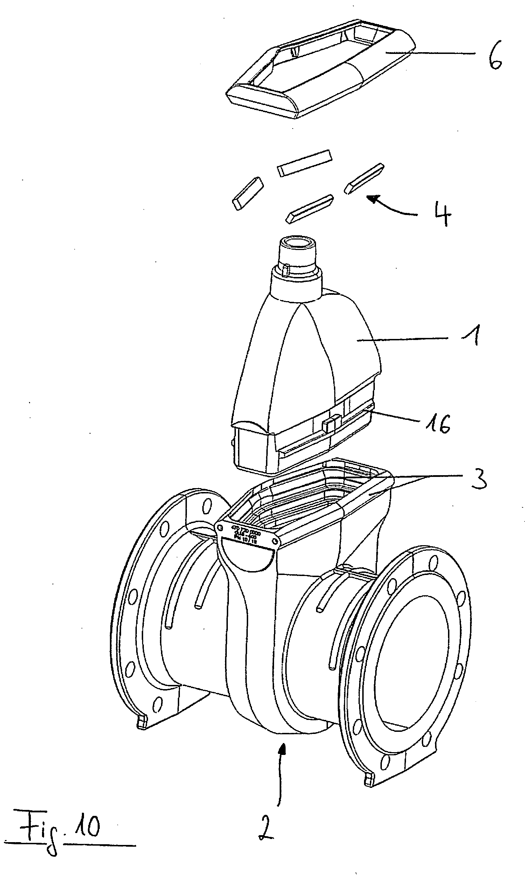

Eine erfindungsgemäße Absperrarmatur ist in den Figuren 9 und 10 gezeigt, wobei die Figur 9 eine Schnittdarstellung und die Figur 10 eine Explosionsansicht ist. Diese Absperrarmatur weist ebenfalls ein Oberteil 1 und ein Unterteil 2 auf, das an seiner Oberseite über eine obere Aufnahme 3 verfügt.

Mit seinem unteren Abschnitt wird das Oberteil 1 der Armatur in die Aufnahme 3 eingesetzt, und es weist einen auskragenden Abschnitt 16 auf, der beim Einsetzen des Oberteils 1 von oben her auf einem Gegenlager in der Aufnahme zu liegen kommt, so dass das Oberteil 1 nicht weiter nach unten in die Aufnahme 3 einrutschen kann. Auf die Auskragung 16, die als Längssteg mit schräg nach unten abfallender Oberfläche ausgebildet ist, werden nach dem Einsetzen des Oberteils 1 einzelne Einsetzelemente 4 aufgelegt, die als stabquaderförmige Bauteile ausgestaltet sind. Nach dem Einlegen der Einsetzelemente 4, die bei der vorliegenden Ausführungsform nicht miteinander verbunden sind und pro Einzelelement eine einteilige Gestalt haben, kann der Deckel 6 über das Oberteil 1 von oben auf die obere Aufnahme 3 aufgesetzt werden, so dass der zusammengebaute Zustand der Figur 9 entsteht. Dabei umgreift der Deckel 6 mit seinem äußeren Wulst einen nach außen gebogenen, oberen Vorsprung der Aufnahme 3 und wird dadurch an diesem gehalten. Beim Aufsetzen kann eine elastische, flexible Verformung des Deckels 6, insbesondere des äußeren Deckelrandwulstes erfolgen. Mit seinem inneren Fortsatz 8 sichert der Deckel 6 die Einsetzelemente 4 von oben (Figur 9), wodurch das Oberteil 1 fest und schraubenlos mit dem Unterteil 2 verbunden wird.

## Patentansprüche

1. Absperrarmatur für Gas- und/oder Flüssigkeits-Versorgungsleitungen, mit einem Oberteil (1, 21), das im wesentlichen eine Betätigung für ein Absperrelement aufweist, und mit einem Unterteil (2, 22), das im wesentlichen den absperrbaren Duchleitungsabschnitt der Armatur umfasst, wobei das Oberteil (1, 21) und das Unterteil (2, 22) schraubenlos über mindestens ein separates Einsetzelement (4, 5, 24) miteinander verbunden sind, wobei das Unterteil eine obere Aufnahme (3, 23) für das Einsetzelement (24) bzw. die Einsetzelemente (4, 5) aufweist und das Einsetzelement bzw. die Einsetzelemente (4, 5, 24) mittels eines separaten Deckelteils (6, 26) gesichert bzw. verklemmt wird bzw. werden, **dadurch gekennzeichnet, dass** der Deckelteil (6, 26) mit seinem äußeren Wulst einen nach außen gebogenen, oberen Vorsprung der Aufnahme (3, 23) umgreift und **dadurch** an diesem gehalten wird.

2. Absperrarmatur nach Anspruch 1, **dadurch gekennzeichnet, dass** das Oberteil (1, 21) und das Unterteil (2, 22) an unbearbeiteten Gussteil-Verbindungsstellen miteinander verbunden sind.

3. Absperrarmatur nach Anspruch 1 oder 2, **dadurch gekennzeichnet, dass** das Deckelteil (6, 26) einen nach unten abstehenden, speziell inneren Fortsatz (8, 28) aufweist, der auf das Einsetzelement (24) bzw. die Einsetzelemente (4, 5) wirkt bzw. drückt.

4. Absperrarmatur nach einem der Ansprüche 1 bis 3, **dadurch gekennzeichnet, dass** das Deckelteil (6, 26) einen nach unten abstehenden, speziell äußeren Fortsatz (29) aufweist, der das Unterteil (22), insbesondere dessen obere Aufnahme (3, 23), von außen umgreift.

5. Absperrarmatur nach einem der Ansprüche 1 bis 4, **dadurch gekennzeichnet, dass** das Deckelteil (26) das Unterteil (22) im zusammengebauten Zustand der Armatur klemmend oder rastend in Eingriff nimmt, insbesondere mit dem äußeren Fortsatz (29).

6. Absperrarmatur nach einem der Ansprüche 1 bis 5, **dadurch gekennzeichnet, dass** die Einsetzselemente (4, 5, 24) aus einem nicht metallischen Material hergestellt sind, insbesondere aus einem Kunststoffmaterial.

7. Absperrarmatur nach einem der Ansprüche 1 bis 5, **dadurch gekennzeichnet, dass** die Einsetzelemente (4, 5, 24) aus einem metallischen Material hergestellt sind, insbesondere aus Stahl.

8. Absperrarmatur nach einem der Ansprüche 1 bis 7, **dadurch gekennzeichnet, dass** das Einsatzelement (24) bzw. die Einsetzelemente (4, 5) flexibel ausgestaltet sind, insbesondere aus einzelnen Klemmteilen (12, 14, 25) bestehen, die mit biegbaren Zwischenstücken (13, 15) miteinander verbunden sind.

9. Absperrarmatur nach einem der Ansprüche 1 bis 8, **dadurch gekennzeichnet, dass** ein Einsetzelement (24) vorgesehen ist, das insbesondere beim Zusammenfügen der Verbindung schräggestellt wird und durch Verklemmung das Oberteil (1) und das Unterteil (2) aneinander hält.

10. Absperrarmatur nach einem der Ansprüche 1 bis 8, **dadurch gekennzeichnet, dass** mindestens zwei Einsetzelemente (4, 5) vorgesehen sind, die Schrägflächen aufweisen, die beim Zusammenfügen der Verbindung gegeneinander verklemmt werden und durch die Verklemmung das Oberteil (1) und das Unterteil (2) aneinander halten.

11. Absperrarmatur Anspruch 10, **dadurch gekennzeichnet, dass** die Verbindungselemente ein erstes Einsetzelement (4) und ein zweites Einsetzelement (5) aufweisen, welche übereinander und/oder nebeneinander und umfänglich in der Aufnahme (3) angeordnet sind.

## Claims

1. A shut-off brace for gas and/or liquid supply conduits, comprising: an upper part (1, 21) which substantially comprises an actuator for a shut-off element; and a lower part (2, 22) which substantially includes the conveying portion of the brace which can be shut off, wherein the upper part (1, 21) and the lower part (2, 22) are connected to each other, without screws, via at least one separate insert element (4, 5, 24), wherein the lower part (2, 22) comprises an upper receptacle (3, 23) for the insert element (24) and/or insert elements (4, 5), and the insert element and/or elements (4, 5, 24) is/are secured and/or jammed by means of a separate cover part (6, 26), **characterised in that** the outer bulge of the cover part (6, 26) encompasses an outwardly bent upper projection of the receptacle (3, 23) and is thus held on the latter.

2. The shut-off brace according to claim 1, **characterised in that** the upper part (1, 21) and the lower part (2, 22) are connected to each other at unmachined cast part connecting points.

3. The shut-off brace according to claim 1 or 2, **characterised in that** the cover part (6, 26) comprises an appendage, specifically an inner appendage (8, 28), which projects downwards and acts and/or presses on the insert element (24) and/or insert elements (4, 5).

4. The shut-off brace according to any one of claims 1 to 3, **characterised in that** the cover part (6, 26) comprises an appendage, specifically an outer appendage (29), which projects downwards and encompasses the lower part (22), in particular its upper receptacle (3, 23), from without.

5. The shut-off brace according to any one of claims 1 to 4, **characterised in that** when the brace is assembled, the cover part (26) engages and thereby clamps or latches the lower part (22), in particular by the outer appendage (29).

6. The shut-off brace according to any one of claims 1 to 5, **characterised in that** the insert elements (4, 5, 24) are manufactured from a non-metallic material, in particular a plastic material.

7. The shut-off brace according to any one of claims 1 to 5, **characterised in that** the insert elements (4, 5, 24) are manufactured from a metallic material, in particular steel.

8. The shut-off brace according to any one of claims 1 to 7, **characterised in that** the insert element (24) and/or insert elements (4, 5) are embodied to be flexible and in particular consist of individual clamping parts (12, 14, 25) which are connected to each other by pliable intermediate pieces (13, 15).

9. The shut-off brace according to any one of claims 1 to 8, **characterised in that** an insert element (24) is provided which is in particular slanted when the connection is joined and which holds the upper part (1) and the lower part (2) on each other by jamming them.

10. The shut-off brace according to any one of claims 1 to 8, **characterised in that** at least two insert elements (4, 5) are provided which comprise slanted areas which are jammed against each other when the connection is joined and which hold the upper part (1) and the lower part (2) on each other by jamming them.

11. The shut-off brace according to claim 10, **characterised in that** the connecting elements comprise a first insert element (4) and a second insert element (5) which are arranged one on top of the other and/or next to each other and circumferentially in the receptacle (3).

## Revendications

1. Vanne d'arrêt pour des conduites d'alimentation de gaz et/ou de liquide, comportant une partie supérieure (1, 21), qui comporte pour l'essentiel un système d'actionnement d'un élément de fermeture, et comportant une partie inférieure (2, 22), qui comprend pour l'essentiel le tronçon de passage, pouvant être fermé, de la vanne, la partie supérieure (1, 21) et la partie inférieure (2, 22) étant assemblées l'une à l'autre sans vis par l'intermédiaire d'au moins un insert (4, 5, 24) séparé, la partie inférieure comportant un logement supérieur (3, 23) pour l'insert (24) ou les inserts (4, 5), et l'insert ou les inserts (4, 5, 24) étant immobilisé(s) ou bloqué(s) par un couvercle (6, 26) séparé, **caractérisée en ce que** le couvercle (6, 26) enserre avec sa collerette extérieure une saillie supérieure, coudée vers l'extérieur, du logement (3, 23) et est ainsi maintenu sur ce dernier.

2. Vanne d'arrêt selon la revendication 1, **caractérisée en ce que** la partie supérieure (1, 21) et la partie inférieure (2, 22) sont reliées l'une à l'autre dans des zones d'assemblage d'une pièce moulée non usinée.

3. Vanne d'arrêt selon la revendication 1 ou 2, **caractérisée en ce que** le couvercle (6, 26) comporte une saillie (8, 28) spécifiquement intérieure, s'avançant vers le bas, laquelle agit ou pousse sur l'insert (24) ou les inserts (4, 5).

4. Vanne d'arrêt selon l'une quelconque des revendications 1 à 3, **caractérisée en ce que** le couvercle (6, 26) comporte une saillie (29) spécifiquement extérieure, s'avançant vers le bas, laquelle enserre de l'extérieur la partie inférieure (22), en particulier le logement (3, 23) supérieur de celle-ci.

5. Vanne d'arrêt selon l'une quelconque des revendications 1 à 4, **caractérisée en ce que**, dans la position assemblée de la vanne, le couvercle (26) enserre la partie inférieure (22) par serrage ou blocage, en particulier avec la saillie (29) extérieure.

6. Vanne d'arrêt selon l'une quelconque des revendications 1 à 5, **caractérisée en ce que** les inserts (4, 5, 24) sont réalisés en un matériau non métallique, en particulier en matière plastique.

7. Vanne d'arrêt selon l'une quelconque des revendications 1 à 5, **caractérisée en ce que** les inserts (4, 5, 24) sont réalisés en un matériau métallique, en particulier en acier.

8. Vanne d'arrêt selon l'une quelconque des revendications 1 à 7, **caractérisée en ce que** l'insert (24) ou les inserts (4, 5) sont flexibles, sont formés en particulier par des éléments de serrage (12, 14, 25) individuels qui sont assemblés entre eux par des pièces intermédiaires (13, 15) flexibles.

9. Vanne d'arrêt selon l'une quelconque des revendications 1 à 8, **caractérisée en ce qu'**il est prévu un insert (24) qui est positionné en oblique en particulier au moment de la réalisation de l'assemblage et qui maintient par serrage la partie supérieure (1) et la partie inférieure (2) l'une contre l'autre.

10. Vanne d'arrêt selon l'une quelconque des revendications 1 à 8, **caractérisée en ce qu'**il est prévu au moins deux inserts (4, 5), qui comportent des surfaces inclinées qui, au moment de la réalisation de l'assemblage, sont serrées l'une contre l'autre et sous l'effet du serrage maintiennent la partie supérieure (1) et la partie inférieure (2) l'une contre l'autre.

11. Vanne d'arrêt selon la revendication 10, **caractérisée en ce que** les éléments d'assemblage comportent un premier insert (4) et un deuxième insert (5), qui sont disposés dans le logement (3) l'un au-dessus de l'autre et/ou l'un à côté de l'autre et sur le pourtour de celui-ci.
